# EUROPEAN PATENT APPLICATION

(11) **EP 3 611 488 A2**
(43) Date of publication of application: **19.02.2020**
(21) Application number: 19219674.9
(22) Date of filing: 24.12.2019
(51) Int. Cl.: G01M 5/00, G01M 13/00

(54) **A HIGH FREQUENCY FATIGUE DYNAMIC LOADING TEST MACHINE FOR RAILWAY FASTENER ELASTIC STRIPS**

(30) Priority: 29.12.2018 CN 201811635425
(71) Applicant: Railway Engineering Research Institute of China Academy of Railway Sciences Corporation Limited, Beijing 100081 (CN); Shanghai University Of Engineering Science, 201620 Shanghai (CN)
(72) Inventor: JUNHENG, Xiao, Beijing, 100081 (CN); ANBIN, Wang, Shanghai, Shanghai 201620 (CN); ZIQUAN, Yan, Beijing, Shanghai 100081 (CN); XIAOGANG, Gao, Shanghai, Shanghai 201620 (CN); HANGWEI, Fang, Beijing, Shanghai 100081 (CN); ZHONGHUI, Xu, Shanghai, Shanghai 201620 (CN); LINLIN, Sun, Beijing, Shanghai 100081 (CN); YANSHAN, Li, Beijing, Shanghai 100081 (CN); HUAN, Zhang, Beijing, Shanghai 100081 (CN)
(74) Representative: Novagraaf Technologies

(57) **Abstract**

The invention relates to a high frequency fatigue dynamic loading test machine for railway fastener elastic strips, comprising a body frame (1), a motor (2), a transmission shaft mechanism (3), a loading connecting rod mechanism (4), a loading block (5), an elastic strip clamping base structure (6), a protective cover (7) and a frame table top (8), which is characterized in that the transmission shaft mechanism (3) comprises a small belt pulley (21) on an output shaft of the motor (2), a camshaft (31), a large belt pulley (33) and a cam (34), wherein the small belt pulley (21) and the large belt pulley (33) are connected through a toothed belt, the large belt pulley (33) and the cam (34) are mounted on the camshaft (31), the loading connecting rod mechanism (4) contacts the cam (34), the other end of the loading connecting rod mechanism is connected with a loading block (5),and the loading block (5) is connected with the elastic strip test sample (62) installed on the elastic strip clamping base structure (6). Compared with the prior art, the loading frequency outputed by the loading block in the invention can reach 5,000 Hz, and the invention has the advantages of being safe and convenient to be observed and the like.

## Description

### Technical field

The invention relates to a fastener elastic strip fatigue test machine in the railway field. Especially for the high frequency fatigue simulation test machine of elastic strips.

### Background technology

As a key part of railway track structure, the fastener system, especially elastic strips connecting the rail and the track, plays an important role in the safe operation of train.

At present, the existing test machines for the fatigue test of fastener elastic strips can only do the low frequency fatigue test below 20Hz. With the increase of train speed, especially the opening and operation of a large number of lines such as high-speed railway, the low-frequency test method of the elastic strip can not fully meet the requirements for the design and application of the elastic strip. In particular, the elastic strips used in high-speed railway, according to many literature reports, the fatigue damage frequency band of the elastic strips is 500Hz∼700Hz. How to simulate the high frequency test in the laboratory is beyond the reach of the existing low frequency test machine or the conventional high frequency vibration test bench. Therefore, based on this reason, it is necessary to design and simulate the fatigue test system of high frequency movement (≥ 20Hz) of the elastic strip.

### Summary of the invention

The purpose of the invention is to provide a high frequency fatigue dynamic loading test machine for railway fastener elastic strip which can simulate high frequency dynamic fatigue loading according to the response frequency in the actual application of elastic strips in order to overcome the defects of the prior art described above.

The object of the invention can be achieved by the following technical scheme: A high frequency fatigue dynamic loading test machine for railway fastener elastic strips, comprising a body frame, a motor , a transmission shaft mechanism , a loading connecting rod mechanism , a loading block, an elastic strip clamping base structure , a protective cover and a frame table top, which is characterized in that the transmission shaft mechanism comprises a small belt pulley on an output shaft of the motor, a camshaft, a large belt pulley and a cam, wherein the small belt pulley and the large belt pulley are connected through a toothed belt, the large belt pulley and the cam are mounted on the camshaft, the loading connecting rod mechanism contacts the cam , the other end of the loading connecting rod mechanism is connected with a loading block, and the loading block is connected with the elastic strip test sample installed on the elastic strip clamping base structure;
in use, the motor is started to drive the small belt pulley on the output shaft to rotate, so that the large belt pulley, the camshaft and the cam are drived to rotate, and the cam drives the loading connecting rod mechanism to rotate periodically in a high frequency, and a generated high frequency excitation is used to conduct a high frequency amplitude excitation and fatigue loading on a preinstalled elastic strip sample installed in the elastic strip clamping base structure through the loading block.

Furthermore, the cam is an eccentric cam which eccentricity is in a range of 0mm ∼ 5mm, and the eccentricity of the cam can be adjusted according to requirements of loading frequencies and loading amplitudes to achieve a dynamic loading of a first low frequency f1 and an amplitude d1, a range of f1 is 0-50 Hz, and f1 = motor output speed / transmission ratio i, wherein transmission ratio i = driving wheel speed / driven wheel speed = (driven wheel diameter / driving wheel diameter) / (1- slip rate); and wherein the driving wheel is the small belt pulley, and the driven wheel is the large belt pulley.

Furthermore, the cam is circular or elliptical, concave and convex polygon structures of a polygon order n with uniform wave lengths and wave depths d2 are uniformly distributed on the circumferential surface of the cam (34) to achieve loading of a second high loading frequency, a range of n is 0-200, achieving high frequency loading frequency f2, a range of d2 is 0-1 mm, f2=n·f1, and a range of f2 is 0-5,000Hz.

the cam comprises structures with different diameters and different polygon orders; if a diameter of the cam is ϕ, a distance between a fastening point of the elastic strip sample and a fixed end of the loading connecting rod (43) is 11, and a distance between the fastening point of the elastic strip sample and a movable end of the loading connecting rod is 12, then the amplitude of the elastic strip d = d2·11 / (11 + 12).

Furthermore, the camshaft is fixed on the frame table top through rolling bearing bases at both ends,

Furthermore, a manual rocker handle is disposed at one end of the camshaft , and meshing differences among the small belt pulley (21)of the motor (2) output, the large belt pulley (33) and the toothed belt are manually adjusted.

Furthermore, the loading connecting rod mechanism comprises a bearing base, a bearing, a loading connecting rod and a rolling bearing, the rolling bearing is disposed at one end of the loading connecting rod ,and the other end is fixed on the bearing base through the bearing, wherein the rolling bearing contacts directly with the cam , and the bearing base is fixed on the frame table top, and the loading block is connected with the loading connecting rod.

Furthermore, the rolling bearing rolls periodically in a high frequency around the circumference of the cam, the loading connecting rod will generate a high frequency excitation amplitude, and transmit the high frequency amplitude to the loading block, the hardness of the rolling bearing and the cam in the frequency rolling contact is matched, and the materials of the rolling bearing and the cam need to be quenched and tempered.

Furthermore, the loading block bears a high frequency vibration given by the cam in the test and a preloading force given by the elastic strip sample, and the preloading force ranges between 0kN and 20kN.

Furthermore, the elastic strip clamping base structure comprises a clamping base, a stud, and a nut, the elastic strip sample is installed and fixed on the clamping base according to normal working conditions, and a preloading force is adjusted through the studs and nuts at both ends of the clamping base.

Furthermore, the elastic strip clamping base structure can be used for the installation and fatigue test of different fastener strip sample structures, the strip sample structures includes "ω" type, "e" type, FC type, and elastic rod or slice.

Furthermore, the loading block and the elastic strip sample are equipped with strain gauges and sensors, and the amplitude and frequency of elastic strip are recorded through a test recording system.

Furthermore, the motor is a frequency conversion motor, a frequency can be loaded for responding to frequency modulation according to the use requirements of the elastic strip sample, and the frequency modulation range is 0Hz∼100Hz, after passing through the transmission shaft mechanism and the loading connecting rod mechanism, the loading block outputs different loading frequency.

Furthermore, the protective cover covers a working platform, and the protective cover is in a fastening protection state during a test to ensure a safety of the test, the protective cover is provided with a transparent observation surface to observe the test situation at any time;a horizontal state of a whole testing machine is adjusted through four supporting feet of the body frame.

Compared with the prior art, a special structural eccentric cam is designed in the testing machine of the invention, and the cam surface is provided with a plurality of bulges and grooves. When the motor drives the eccentric cam to rotate, the loading connecting rod which contacts with the eccentric cam surface can generate a high frequency excitation amplitude, and the loading connecting rod will excite the loading block to conduct high frequency amplitude excitation and fatigue loading for the preinstalled elastic strip sample on the clamping base. The loading frequency outputted by the loading block can reach 5,000Hz. At the same time, the protective cover is in the state of fastening protection during the test to ensure the safety of the test. The protective cover can be provided with a transparent observation surface to observe the test situation at any time.

### Description of drawings

Fig. 1 is a schematic diagram of the overall structure of the invention.
Fig. 2 is a schematic diagram of the transmission structure of the invention.
Fig. 3 is a schematic diagram of the camshaft transmission structure of the invention.
Fig. 4 is a schematic diagram of the cam structure of the invention.
Fig.5 is a schematic diagram of the loading connecting rod structure of the invention.
Fig.6 is a schematic diagram of amplitude calculation principle of the invention.
Fig.7 is the structural diagram of the elastic strip clamping base structure of embodiment 1.
Fig.8 is a schematic diagram of the elastic strip clamping base structure of embodiment 2.
Fig. 9 is a schematic diagram of the elastic strip clamping base structure of embodiment 3.

In the figure, the symbols are: 1. Frame; 2. Motor; 3. Transmission shaft mechanism; 4. Loading connecting rod mechanism; 5. Loading block; 6. Elastic strip clamping base structure; 7. Protective cover; 8. Frame table top; 9. Supporting foot; 10. Table panel; 11. Manual rocker handle; 21. Small belt pulley; 31. Camshaft; 32. Camshaft bearing; 33; Large belt pulley; 34. Cam; 35. Rolling bearing base; 41. Bearing base; 42. Bearing; 43. Loading connecting rod; 44. Rolling bearing; 61. Clamping base; 62. Elastic strip sample; 63. Stud; 64. Nut; 65. Elastic strip base; 66. Base.

### Specific implementation mode

The invention will be described in detail below in combination with the drawings and specific embodiments.

### Example 1

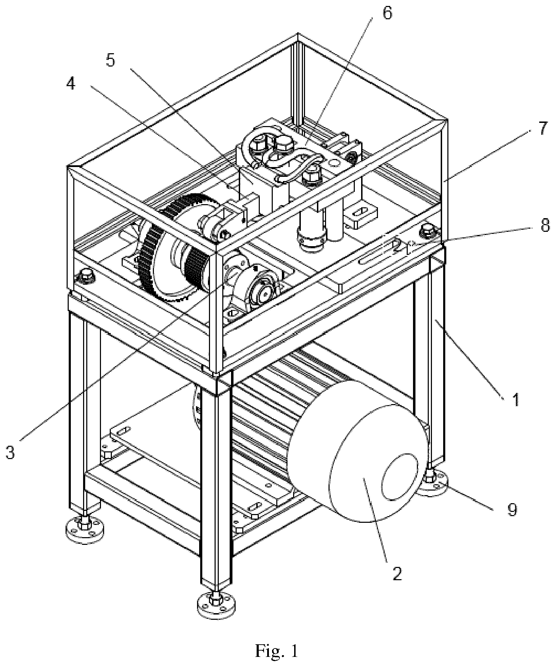

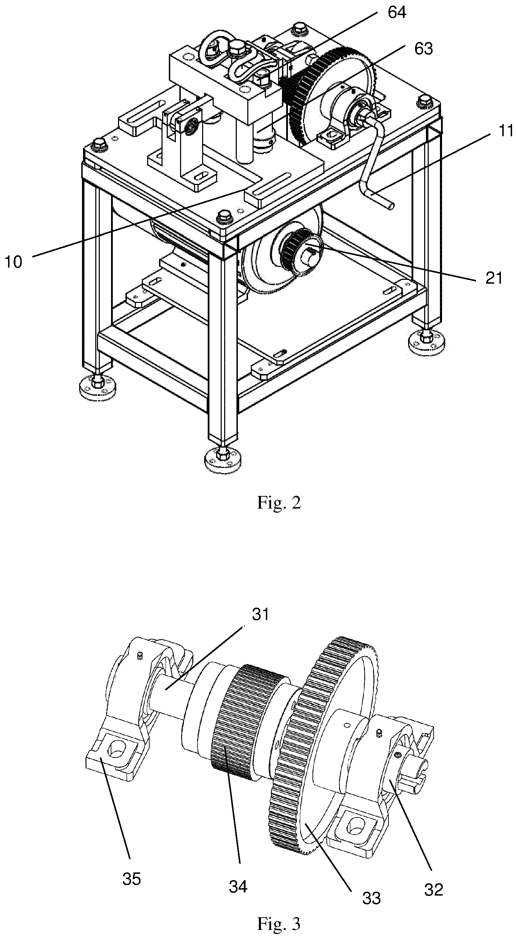

As shown in Fig. 1-2, a high frequency fatigue dynamic loading test machine for railway fastener elastic strip comprises a body frame (1), a motor (2), a transmission shaft mechanism (3), a loading connecting rod mechanism (4), a loading block (5), an elastic strip clamping base structure (6), a protective cover (7) and a frame table top (8), wherein the transmission shaft mechanism (3) comprises a small belt pulley (21) on the output shaft of the motor (2), a camshaft (31), a large belt pulley (33) and a cam (34),wherein the small belt pulley (21) and the large belt pulley (33) are connected through a toothed belt, the large belt pulley (33) and the cam (34) are mounted on the camshaft (31), the camshaft (31) is fixed on the frame table top (8) through the rolling bearing bases (35) at both ends, the camshaft bearing (32) is mounted between the camshaft (31) and the rolling bearing bases (35),a manual rocker handle (11) is disposed at one end of the camshaft (31), and meshing differences among the small belt pulley (21)of the motor (2) output, the large belt pulley (33) and the toothed belt are manually adjusted, as shown in Fig. 3-4.

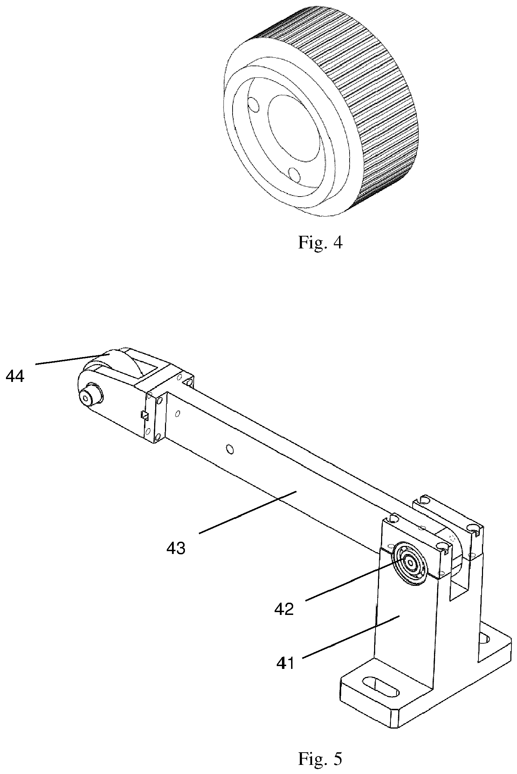

The loading connecting rod mechanism (4) comprises a bearing base (41), a bearing (42), a loading connecting rod (43) and a rolling bearing (44), the rolling bearing (44) is disposed at one end of the loading connecting rod (43),and the other end is fixed on the bearing base (41) through the bearing (42), wherein the rolling bearing (44) contacts directly with the cam (34), and the bearing base (41) is fixed on the frame table top (8), and the loading block (5) is connected with the loading connecting rod (43).The rolling bearing (44) rolls periodically in a high frequency around the circumference of the cam (34), the loading connecting rod (43) will generate a high frequency excitation amplitude, and transmit the high frequency amplitude to the loading block (5),the stimulated loading block (5)carry out a dynamic loading on the elastic strip sample (62),the hardness matching problem in the frequency rolling contact is considered in the design of the roller bearing (44) and the cam (34), and the materials of the rolling bearing (44) and the cam (34) need to be quenched and tempered. As shown in Figure 5.

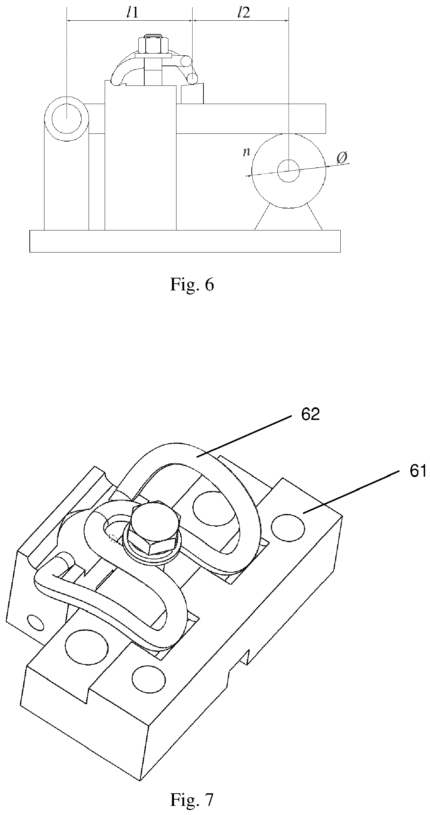

The elastic strip clamping base structure (6) comprises a clamping base (61), a stud (63) and a nut (64),the elastic strip sample (62) is installed and fixed on the clamping base (61) according to normal working conditions, and a preloading force is adjusted through the studs (63) and nuts (64) at both ends of the clamping base (61). As shown in Fig. 2 and Fig. 6. In the test, the loading block (5) bears the high frequency vibration given by the cam (34)and a preloading force given by the elastic strip sample (62), and the preloading force ranges between 0kN and 20kN; the preloading force of the elastic strip sample is adjusted by the studs (63) and nuts (64) at both ends of the elastic strip clamping base structure (6). The elastic strip clamping base structure (6) can be used for the installation and fatigue test of the "co" type fastener elastic strip sample structure.

The protective cover (7) covers the table panel (10) of the working platform, and the protective cover (7) is in a fastening protection state during the test to ensure a safety of the test, the protective cover (7) is provided with a transparent observation surface to observe the test situation at any time; the horizontal state of the whole testing machine is adjusted through four supporting feet (9) of the body frame (1). As shown in Figure 1.

The working principle of the high frequency testing machine is as follows: the motor (2) is started to drive the small belt pulley (21) on the output shaft, the toothed belt is connected with the large belt pulley (33) on the camshaft (31), the cam (34) on the camshaft (31) is driven synchronously according to the designed transmission ratio, the cam (34) drives the rolling bearing (44) at one end of the loading connecting rod mechanism (4) to rotate periodically in a high frequency, the loading connecting rod (43) will generate a high frequency excitation amplitude, and the loading block (5) stimulated by the loading connecting rod (43) conducts a high frequency amplitude excitation and fatigue loading on the preinstalled elastic strip (62) on the clamping base (6), and the protective cover (7) is in the state of fastening protection during the test. A horizontal state of a whole testing machine is adjusted through four supporting feet (9) of the body frame (1).

In combination with Fig. 1 and Fig. 2, the motor (2) is a frequency conversion motor, a frequency can be loaded for responsing to frequency modulation according to the use requirements of the elastic strip sample(62) ,and the frequency modulation range is 0Hz ∼ 100Hz, after passing through the transmission shaft mechanism (3) and the loading connecting rod mechanism (4),the loading frequency outputed by the loading block (5) can reach 5,000Hz; the motor output small belt pulley (21) in the transmission shaft mechanism (3)and the large belt pulley(33) on the camshaft (31) are connected by the toothed belt, the transmission ratio i = driving wheel speed / driven wheel speed = (driven wheel diameter / driving wheel diameter) / (1-slip rate), and wherein the driving wheel is the small belt pulley (21), and the driven wheel is the large belt pulley (33).

N polygons are uniformly distributed on the circumferential surface of the cam (34), the concave convex polygon structure with uniform wavelength and wave depth d2 achieves a second high frequency loading, a range of n is 0-200, achieving high frequency loading frequency f2, a range of d2 is 0-1mm; the high frequency loading frequency f2 = n ·f1, a range of the high frequency loading frequency f2 is 0-5,000Hz, the cam (34) can comprise structures with different diameters and different polygon orders, if a diameter of cam (34) is ϕ, a distance between a fastening point of the elastic strip sample (62) and a fixed end of the loading connecting rod (43) is 11, the distance between the fastening point of the elastic strip sample (62) and a movable end of the loading connecting rod (43) is 12, then: the amplitude of the elastic strip d = d2 · 11 / (11 + 12).

A certain number of the concave convex polygon structures with uniform wavelength and wave depth, the number of wave length and wave depth in a cycle can be calculated according to a formula: n = analog frequency / (selected the motor output speed / transmission ratio i), where the transmission ratio i is the same as the above i value, and the cam (34) structure can be designed as circular or elliptical.

### Example 2:

The main structure of embodiment 2 is the same as that of embodiment 1, and the difference is the difference of the elastic strip clamping structure (6). Other structures and embodiments are the same as embodiment 1. This embodiment aims to explain the difference between the embodiment 1 and embodiment 2.

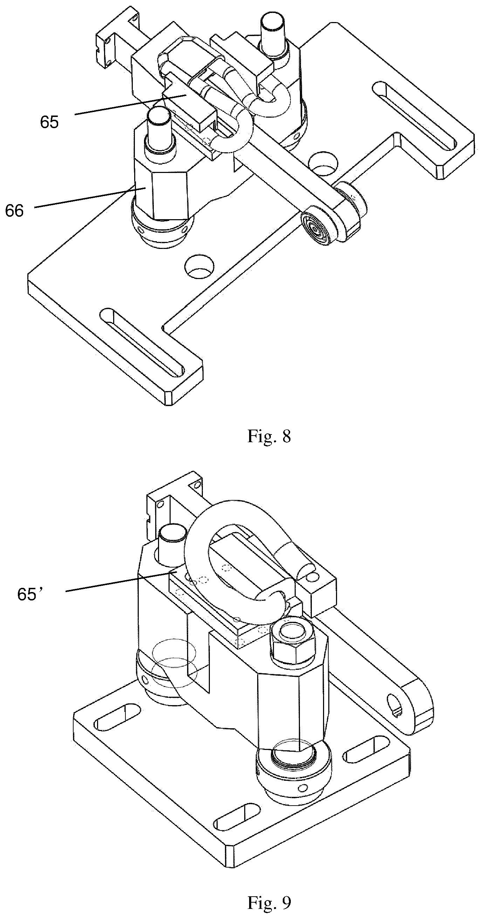

Combined with figure 8, in this embodiment, because the structure of the sample elastic strip is changed to FC fastener elastic strip, the sample elastic strip will be fixed on the base (66) through the elastic strip base (65), and a preloading force of the elastic strip will be adjusted through the studs (63) and nuts (64) at both ends; the loading block (5) is still connected with the connecting rod, and the loading block (5) directly performs high frequency amplitude on the middle ring of the sample elastic strip.

### Example 3:

The main structure of embodiment 3 is the same as that of embodiment 1, and the difference is the difference of the elastic strip clamping structure (6). Other structures and embodiments are the same as embodiment 1. This embodiment aims to explain the difference between the embodiment 1 and embodiment 3.

Combined with figure 9, in this embodiment, because the structure of the sample elastic strip is changed to "e" type fastener elastic strip, the sample elastic strip will be fixed on the base (66) through the elastic strip base (65), and a preloading force of the elastic strip will be adjusted through the studs (63) and nuts (64) at both ends; the loading block (5) is still connected with the connecting rod, and the loading block (5) directly performs high frequency amplitude on the back toe of the sample elastic strip.

## Claims

1. A high frequency fatigue dynamic loading test machine for railway fastener elastic strips, comprising a body frame (1), a motor (2), a transmission shaft mechanism (3), a loading connecting rod mechanism (4), a loading block (5), an elastic strip clamping base structure (6), a protective cover (7) and a frame table top (8), which is **characterized in that** the transmission shaft mechanism (3) comprises a small belt pulley (21)on an output shaft of the motor (2), a camshaft (31), a large belt pulley (33) and a cam (34), wherein the small belt pulley (21) and the large belt pulley (33) are connected through a toothed belt, the large belt pulley (33) and the cam (34) are mounted on the camshaft (31), the loading connecting rod mechanism (4) contacts the cam (34), the other end of the loading connecting rod mechanism(4) is connected with a loading block (5), and the loading block (5) is connected with a elastic strip test sample (62) installed on the elastic strip clamping base structure (6);
in use, the motor (2) is started to drive the small belt pulley (21) on the output shaft to rotate, so that the large belt pulley (33), the camshaft (31) and the cam (34) are driven to rotate, and the cam (34) drives the loading connecting rod mechanism (4) to rotate periodically in a high frequency, and a generated high frequency excitation is used to conduct a high frequency amplitude excitation and fatigue loading on a preinstalled elastic strip sample (62) installed in the elastic strip clamping base structure (6) through the loading block (5).

2. The high frequency fatigue dynamic loading test machine for railway fastener elastic strips according to claim 1, which is **characterized in that** the cam (34) is an eccentric cam which eccentricity is in a range of 0mm ∼ 5mm, and the eccentricity of the cam (34) can be adjusted according to requirements of loading frequencies and loading amplitudes to achieve a dynamic loading of a first low frequency f1 and an amplitude d1, a range of f1 is 0-50 Hz, and f1 = motor output speed / transmission ratio i, wherein transmission ratio i = driving wheel speed / driven wheel speed = (driven wheel diameter / driving wheel diameter) / (1- slip rate); and wherein the driving wheel is the small belt pulley (21), and the driven wheel is the large belt pulley (33).

3. The high frequency fatigue dynamic loading test machine for railway fastener elastic strips according to any one of claims 1 or 2, which is **characterized in that** the cam (34) is circular or elliptical, concave and convex polygon structures of a polygon order n with uniform wave lengths and wave depths d2 are uniformly distributed on the circumferential surface of the cam (34) to achieve loading of a second high loading frequency, a range of n is 0-200, achieving high frequency loading frequency f2, a range of d2 is 0-1 mm, f2=n·f1, and a range of f2 is 0-5,000Hz,
the cam (34) comprises structures with different diameters and different polygon orders; if a diameter of the cam (34) is ϕ, a distance between a fastening point of the elastic strip sample (62) and a fixed end of the loading connecting rod (43) is 11, and a distance between the fastening point of the elastic strip sample (62) and a movable end of the loading connecting rod (43) is 12, then the amplitude of the elastic strip d = d2·11 / (11 + 12).

4. The high frequency fatigue dynamic loading test machine for railway fastener elastic strips according to any one of claims 1 to 3, which is **characterized in that** the camshaft (31) is fixed on the frame table top (8) through rolling bearing bases (35) at both ends, a manual rocker handle (11) is disposed at one end of the camshaft (31), and meshing differences among the small belt pulley (21)of the motor (2) output, the large belt pulley (33) and the toothed belt are manually adjusted.

5. The high frequency fatigue dynamic loading test machine for railway fastener elastic strips according to any one of claims 1 to 4, which is **characterized in that** the loading connecting rod mechanism (4) comprises a bearing base (41), a bearing (42), a loading connecting rod (43) and a rolling bearing (44), the rolling bearing (44) is disposed at one end of the loading connecting rod (43),and the other end is fixed on the bearing base (41) through the bearing (42), wherein the rolling bearing (44) contacts directly with the cam (34), and the bearing base (41) is fixed on the frame table top (8), and the loading block (5) is connected with the loading connecting rod (43).

6. The high frequency fatigue dynamic loading test machine for railway fastener elastic strips according to claim 5, which is **characterized in that** the rolling bearing (44) rolls periodically in a high frequency around the circumference of the cam (34), the loading connecting rod (43) will generate a high frequency excitation amplitude, and transmit the high frequency amplitude to the loading block (5), the hardness of the rolling bearing (44) and the cam (34) in the frequency rolling contact is matched , and materials of the rolling bearing (44) and the cam (34) need to be quenched and tempered.

7. The high frequency fatigue dynamic loading test machine for railway fastener elastic strips according to claim 5 or 6, which is **characterized in that** the loading block (5) bears a high frequency vibration given by the cam (34) in the test and a preloading force given by the elastic strip sample (62), and the preloading force ranges between 0kN and 20kN.

8. The high frequency fatigue dynamic loading test machine for railway fastener elastic strips according to any one of claims 1 to 7, which is **characterized in that** the elastic strip clamping base structure (6) comprises a clamping base (61), a stud (63), and a nut (64), the elastic strip sample (62) is installed and fixed on the clamping base (61) according to normal working conditions, and a preloading force is adjusted through the studs (63) and nuts (64) at both ends of the clamping base (61).

9. The high frequency fatigue dynamic loading test machine for railway fastener elastic strips according to any one of claims 1 to 8, which is **characterized in that** the elastic strip clamping base structure (6) can be used for a installation and fatigue test of different fastener strip sample structures, the strip sample structures includes "co" type, "e" type, FC type, and elastic rod or slice.

10. The high frequency fatigue dynamic loading test machine for elastic strips of railway fastener according to any one of claims 1 to 9, which is **characterized in that** the loading block (5) and the elastic strip sample (62) are equipped with strain gauges and sensors, and the amplitude and frequency of elastic strip are recorded through a test recording system.

11. The high frequency fatigue dynamic loading test machine for railway fastener elastic strips according to any one of claims 1 to 10, which is **characterized in that** the motor (2) is a frequency conversion motor, a frequency can be loaded for responsing to frequency modulation according to a use requirements of the elastic strip sample (62), and a frequency modulation range is 0Hz∼100Hz, after passing through the transmission shaft mechanism (3) and the loading connecting rod mechanism (4), the loading block (5) outputs different loading frequency.

12. The high frequency fatigue dynamic loading test machine for railway fastener elastic strips according to any one of claims 1 to 11, which is **characterized in that** the protective cover (7) covers a working platform, and the protective cover (7) is in a fastening protection state during a test to ensure a safety of the test, the protective cover (7) is provided with a transparent observation surface to observe the test situation at any time;a horizontal state of a whole testing machine is adjusted through four supporting feet(9) of the body frame(1).
